# EUROPÄISCHE PATENTSCHRIFT

(11) **EP 2 149 435 B1**
(45) Veröffentlichungstag und Bekanntmachung des Hinweises auf die Patenterteilung: **06.07.2011**
(21) Anmeldenummer: 09009515.9
(22) Anmeldetag: 22.07.2009
(51) Int. Cl.: B25J 19/00

(54) **Verfahren zum Reinigen eines mehrere über Gelenke verbundene Glieder aufweisenden Manipulators**
Method for cleaning a manipulator with several members connected by joints
Procédé de nettoyage d'un manipulateur comprenant plusieurs bielles reliées par des articulations

(30) Priorität: 31.07.2008 DE 102008035641
(43) Veröffentlichungstag der Anmeldung: 03.02.2010
(73) Patentinhaber: KUKA Roboter GmbH, 86165 Augsburg (DE)
(72) Erfinder: Fornoff, Peter, 83059 Kolbermoor (DE)
(74) Vertreter: Patentanwälte Funk & Böss GbR

(56) Entgegenhaltungen:
- EP-A- 0 494 804
- JP-A- 2 017 959
- JP-A- 4 338 273
- JP-A- 2001 087 685
- US-A- 4 416 577

## Beschreibung

Die Erfindung betrifft ein Verfahren zum Reinigen eines mehrere über Gelenke verbundene Glieder aufweisenden Manipulators.

Aus der JP 2001-087685 A ist ein Verfahren und eine Vorrichtung zum Waschen eines Beschichtungsroboters bekannt. Um einen Beschichtungsroboter effizient reinigen zu können, werden darin mehrere Roboter beschrieben, welche für die Beschichtungsarbeit eingesetzt werden, und die mit Wascheinrichtungen versehen sind, um eine Waschlösung mit Luft gemischt auszustoßen. Die bekannte Lösung sieht vor, dass mindestens zwei Roboter verwendet werden, die sich gegenseitig waschen. Nachteilig ist es jedoch, dass die darin beschriebenen Verfahren nur in Arbeitszellen durchgeführt werden können, in denen mehrere Roboter vorhanden sind. Insbesondere müssen die mehreren Roboter auch in einer solchen Nähe zueinander positioniert sein, dass der Waschstrahl des einen Roboters den zu waschenden anderen Roboter erreichen kann.

Aufgabe der Erfindung ist es, eine automatische Reinigung eines Manipulators zu ermöglichen, ohne auf weitere Manipulatoren angewiesen zu sein.

Die Aufgabe wird mit einem erfindungsgemäßen Verfahren gelöst, welches die folgenden Schritte aufweist:
- Ausstatten des Manipulators mit mindestens einer Reinigungsdüse an einem seiner Glieder,
- Erzeugen eines Strahls aus Reinigungsfluid am Austritt der mindestens einen Reinigungsdüse,
- Bewegen der Glieder des Manipulators, so dass der Strahl aus Reinigungsflüssigkeit auf eine Oberfläche mindestens eines der manipulatoreigenen Glieder gerichtet ist.

Das erfindungsgemäße Verfahren hat den Vorteil, das der Betreiber eines Manipulators keine gesonderten Automatisierungseinrichtungen bereitstellen muss, um den Manipulator selbst reinigen zu können. Dies ist besonders dann von Vorteil, wenn eine Manipulator-Arbeitszelle lediglich mit einem einzigen Manipulator ausgestattet ist. Die erfindungsgemäße Lösung kann aber auch dann sinnvoll sein, wenn zwar mehrere Manipulatoren in einer gemeinsamen Arbeitszelle betrieben werden, die mehreren Manipulatoren jedoch so weit voneinander entfernt positioniert sind, dass ein von einem ersten Manipulator ausgehender Reinigungsstrahl einen zweiten Roboter gar nicht erreichen kann, oder nur Teilbereiche des Manipulators erreicht werden können.

Als Manipulator wird jede Maschine verstanden, deren Mechanismus aus einer Folge von weitgehend starren Komponenten d.h. Gliedern besteht, die durch Gelenke verbunden sind, mit dem Zweck Gegenstände d.h. auch Werkzeuge zu greifen bzw. zu bewegen. Ein Manipulator weist üblicher Weise mehrere Freiheitsgrade auf. Die Gelenke können sowohl rotatorische als auch translatorische Freiheitsgrade besitzen. Die Erfindung bezieht sich im Speziellen auf Roboter, insbesondere Industrieroboter, welche automatisch gesteuerte, frei programmierbare Mehrzweck-Manipulatoren darstellen. Roboter besitzen im Allgemeinen drei oder mehr Freiheitsgrade, die wahlweise rotatorische oder translatorische Bewegungen ausführen. Roboter können entweder an einem festen Ort installiert oder beweglich d.h. insbesondere fahrbar angeordnet sein. Ein Roboter wird üblicher Weise durch eine frei programmierbare Steuerung inklusive Hardware und Software betrieben. Als Industrieroboter werden Roboter verstanden, die üblicher Weise im gewerblichen Umfeld zur Automatisierung im Rahmen der Herstellung von Produkten eingesetzt werden und zwar überwiegend im Bereich der Fertigung, Montage, Handhabung und Logistik.

Reinigung wird im Zusammenhang mit der Erfindung weit verstanden und umfasst im einfachsten Falle die bloße Beseitigung von anhaftendem Schmutz, aber auch die chemische Reinigung der Oberflächen z.B. durch Lösungsmittel, sowie alle Arten von Desinfektion und Sterilisation. Eine Beseitigung von Schmutz kann bspw. schon alleine durch die mechanische Einwirkung von Druckluft oder Wasser auf die zu reinigende Oberfläche erfolgen. Eine Desinfektion bewirkt eine deutliche Keimreduktion, so dass ein vom behandelten Objekt ausgehendes Infektionsrisiko minimiert ist. Die Desinfektion kann bspw. durch Zugabe von chemischen Substanzen, wie Alkoholen, Sauerstoff- oder Chlorhaltigen Oxidationsmitteln, Säuren wie Essigsäuren in eine wässerige Lösung erfolgen.

Eine Sterilisation soll eine weitgehend vollständige Beseitigung von lebenden Mikroorganismen und deren Sporen, sowie von Viren, Plasmiden und DNA-Fragmenten bewirken.

Die Reinigung kann aber auch in einer Dekontamination von bspw. radioaktiv belasteten Oberflächen des Manipulators bestehen. Neben einer Säuberung in Art einer Schmutzbeseitigung kann als Reinigung auch eine Nachbearbeitung der Oberflächen des hergestellten Manipulators bspw. in Art des Sandstrahlens verstanden werden. Als zur Erfindung äquivalent anzusehen wären diesbezüglich ähnliche Oberflächenbearbeitungsvorgänge wie bspw. das Aufbringen von Schutzschichten, insbesondere ein Wachsbeschichten, bis hin zum Lackieren des Roboters selbst.

In einer Weiterbildung kann der Strahl aus Reinigungsfluid durch eine am distalen Endglied des Manipulators angeordneten Reinigungsdüse vom distalen Endglied ausgehend entlang der Glieder des Manipulators bis zum proximalen Anfangsglied geführt werden.

Als distales Endglied kann das Glied des Roboters angesehen werden, das üblicher Weise einen Endeffektor d.h. ein Werkzeug trägt. Dieses Endglied wird auch als Handflansch bezeichnet. Er kann das freie äußere Ende eines mehrachsigen Knickarmroboters mit serieller Kinematikkette sein. Als proximales Anfangsglied kann dasjenige Glied des Roboters verstanden werden, welches an einem definierten Bezugspunkt festgelegt ist. An das proximale Anfangsglied schließt sich die erste Achse des Roboters an. Es wird auch als Grundgestellt bezeichnet. Ein Basiskoordinatensystem des Roboters ist üblicher Weise auf dieses feste Anfangsglied d.h. auf sein Grundgestellt bezogen. Die Reinigungsdüse kann also wie ein übliches Werkzeug am Handflansch des Roboters als Endeffektor gehalten sein. Die Reinigungsdüse kann statt eines Werkzeugs am Handflansch des Roboters gehalten sein. Die Reinigungsdüse kann aber auch an einem bestehenden Werkzeug, das am Handflansch des Roboters gehalten ist, befestigt sein, d.h. die Reinigungsdüse bildet einen Teil des Werkzeugs. Dies hat den Vorteil, dass ein Werkzeugwechsel zu Beginn des Reinigungsvorgangs entfallen kann. Eine Reinigung kann somit beginnend am Handflansch des Roboters entlang der Kinematikstruktur des Roboters erfolgen und zwar bis hin zu dessen festem Ende, seinem Grundgestell. Dies ist besonders vorteilhaft bei üblichen Installationen eines Roboters an einem Boden. Dabei beginnt die Reinigung an einem oberen Ende und schreitet in Schwerkraftrichtung nach unten voran. Der Roboter kann dabei eine generelle Ausrichtung annehmen, in welcher der Roboterarm nach oben gestreckt orientiert ist. Dies hat den Vorteil, dass Reinigungsfluid, das auf einem distalen Abschnitt aufgebracht wurde der Roboterstruktur entlang aufgrund der Schwerkraft nach unten läuft und bereits eine Vorreinigung der proximalen Abschnitte der Roboterstruktur bewirken. Gleichzeitig ist verhindert, dass gelöster Schmutz aufgrund der Schwerkraft wieder auf eine bereits gereinigte Oberfläche des Roboters aufgebracht wird.

Anders kann vorgegangen werden, wenn sich der Roboter bspw. in einer decken- oder wandmontierten Anbaulage befindet. Bei einer Deckenmontage kann es sinnvoll sein, zunächst mit der Reinigung des proximalen Anfangsgliedes zu beginnen und dann wiederum in Schwerkraftrichtung fortschreitend in Richtung des distalen Endgliedes zu arbeiten.

Der Strahl aus Reinigungsfluid kann in allen Ausgestaltungen auch zur Reinigung eines Dichtungsspaltes entlang des Umfangs mindestens eines Drehgelenks des Manipulators geführt werden.

Verschmutzung tritt häufig in besonderen Maße im Bereich der Gelenkspalte auf. Dies gründet sich darin, dass der Bereich der Gelenkspalte meist einen von der Oberfläche rückspringenden Spaltraum bildet, in dem sich schmutz vermehr ansammeln kann. Gleichzeitig ist eine Reinigung der Gelenkspalte z.B. durch manuelles Heranführen der Reinigungsdüse kritisch, da bei einem zu nahen Heranführen der Reinigungsdüse oder eines ungünstigen Strahlwinkels die Dichtung des Robotergelenks im Bereich des Gelenkspaltes beschädigt werden könnte. Folglich ist eine automatisierte Reinigung besonders dieser Drehgelenke des Manipulators vorteilhaft. Durch eine automatisierte Reinigung kann sowohl sichergestellt werden ,dass ein bspw. hinsichtlich des Arbeitsdruckes erforderlicher Mindestabstand zu den Dichtungen von der Reinigungsdüse eingehalten wird und auch der Anstellwinkel mit dem der Reinigungsstrahl auf die Dichtungen auftrifft vorgegeben werden.

Dazu kann der Strahl aus Reinigungsfluid durch Bewegen desjenigen Drehgelenks um den Umfang geführt werden, dessen Dichtungsspalt zu reinigen ist. Zunächst wird dabei im Bereich des zu reinigenden Drehgelenks die Reinigungsdüse hinsichtlich Mindestabstand und Anstellwinkel vorpositioniert. Zur Reinigung des gesamten Umfangs des Drehgelenks ist sodann keine aufwendige Steuerung notwenig, sondern es genügt lediglich die zu reinigende Achse des Manipulators zu bewegen. Der Abstand und die Orientierung der Reinigungsdüse bleibt bei Drehung nur dieser zu reinigenden Achse erhalten. Ein Programmieraufwand für die Abfolge der Reinigungsbewegungen ist somit verringert.

Statt einer einzelnen Reinigungsdüse kann in allen Varianten auch an zwei oder mehreren Gliedern des Manipulators jeweils mindestens eine Reinigungsdüse betrieben werden.

Neben einer einzelnen Reinigungsdüse am Handflansch des Manipulators können weitere Reinigungsdüsen an mindestens einem Glied des Manipulators zusätzlich vorgesehen sein. Die zusätzlichen Reinigungsdüsen können an den jeweiligen Gliedern des Manipulators starr befestigt sein. Alternativ können die zusätzlichen Reinigungsdüsen auch einstellbar, insbesondere in ihren jeweiligen Anstellwinkeln an den jeweiligen Gliedern des Manipulators variabel gelagert sein. Fest an einem Glied des Manipulators installierte zusätzliche Reinigungsdüsen können bspw. derart ausgerichtet sein, dass ihre Reinigungsstrahlen insbesondere auf einen Gelenkspalt zwischen dem Glied des Manipulators an dem die Reinigungsdüse befestigt ist und einem daran anschließenden Glied des Manipulators gerichtet sind. Sind bspw. zwei oder drei über den Umfang des Gelenkspalts eines Drehgelenks gleichmäßig verteilte zusätzliche Reinigungsdüsen installiert, so kann eine vollumfängliche Reinigung bereits durch eine Drehung dieses Gelenks um ca. 180° bzw. 120° erreicht werden. Auf eine intensive Reinigung der Gelenkspalte ist besonders zu achten, da dort die größte Gefahr besteht, dass sich Verunreinigungen festsetzen können, die insbesondere durch eine oberflächliche Reinigung nicht vollständig entfernt werden.

Der Manipulator kann ergänzend in allen Verfahrensvarianten zusätzlich entlang eines Strahls aus Reinigungsfluid aus einer ortsfest installierten Reinigungsdüse geführt werden. Dazu kann eine oder mehrere ortsfest installierte Reinigungsdüsen an einer Seitenwand des Raumes oder der Arbeitszelle befestigt sein. Die ergänzende mindestens eine ortsfest installierte Reinigungsdüse dient vorzugsweise dazu, diejenigen Stellen des Manipulators reinigen zu können, die durch eine am Handflansch getragene Reinigungsdüse nicht oder nur schwer erreichbar ist. So wird bspw. der Handflansch selbst kaum durch die am Handflansch befestigte Reinigungsdüse gereinigt werden können. In diesem Fall kann der Manipulator derart angesteuert werden, dass der Handflansch in die Nähe der ortsfest installierten Reinigungsdüse bzw. in dessen Reinigungsstrahl bewegt wird.

Die Reinigungsdüse kann an einer Lanze vorgesehen sein, die mit einem Reinigungsgerät verbunden ist. Das Reinigungsgerät kann bspw. ein übliches Hochdruckreinigungsgerät sein, wie es im industriellen Umfeld eingesetzt wird.

Die Reinigungsdüse bzw. die Lanze kann in einer Winkellage, insbesondere in einer rechtwinkeligen Lage zur Achse des distalen Endgelenkes am Endglied des Manipulators befestigt sein. Diese Winkellage bezieht sich entweder auf die Strahlrichtung der Reinigungsdüse oder auf die wesentliche Längserstreckung der Lanze. Die Anordnung der Reinigungsdüse bzw. der Lanze in einer Winkellage verbessert die Erreichbarkeit der gesamten Oberfläche des Manipulators.

In allen Varianten kann die Reinigungsdüse über ein zusätzliches Gelenk mit einem Glied des Manipulators verbunden sein. Das zusätzliche Gelenk kann manuelle einstellbar sein. Dabei wird die Reinigungsdüse vor Beginn des Reinigungsvorgangs eingestellt und während des Reinigungsvorgangs die Orientierung der Reinigungsdüse nicht verändert. Alternativ kann das zusätzliche Gelenk angesteuert sein, insbesondere elektromotorisch durch die Steuerung des Manipulators. Dies hat den Vorteil, dass die Reinigungsdüse auch während des Reinigungsvorgangs zusätzlich zu den Achsbewebungen des Roboters verstellt werden kann. Dabei kann das zusätzliche Gelenk als Zusatzachse eines frei programmierbaren Mehrachsmanipulators motorisch angetrieben sein.

In jeder Ausgestaltung des Manipulators kann die mindestens eine Reinigungsdüse mittels eines Wechseladapters lösbar mit einem Glied des Manipulators verbunden sein. Dies ermöglicht einen variablen Austausch von unterschiedlichen Düsenarten. Unterschiedliche Düsen können bspw. je nach Art des Reinigungsvorgangs

Die Erfindung ist anhand eines Ausführungsbeispiels näher erläutert. Alle Merkmale dieses konkreten Ausführungsbeispiels können weitere vorteilhafte Ausgestaltungen der Erfindung offenbaren.

Es zeigen:
- Fig. 1: ein Ablaufdiagramm eines erfindungsgemäßen Verfahrens zum Reinigen eines Industrieroboters als Manipulator;
- Fig. 2: einen Industrieroboter als Manipulator zur Verwendung in einem erfindungsgemäßen Verfahrens zum Reinigen;
- Fig. 3 bis 8: eine perspektivische Ansicht einer Bearbeitungssequenz zur erfindungsgemäßen Selbstreinigung einer Grundachse des Industrieroboters nach Figur 2;
- Fig. 9 bis 15: eine perspektivische Ansicht einer Bearbeitungssequenz zur erfindungsgemäßen Selbstreinigung einer Armachse des Industrieroboters nach Figur 2;
- Fig. 16 bis 18: eine vergrößerte perspektivische Teilansicht einer Bearbeitungssequenz.

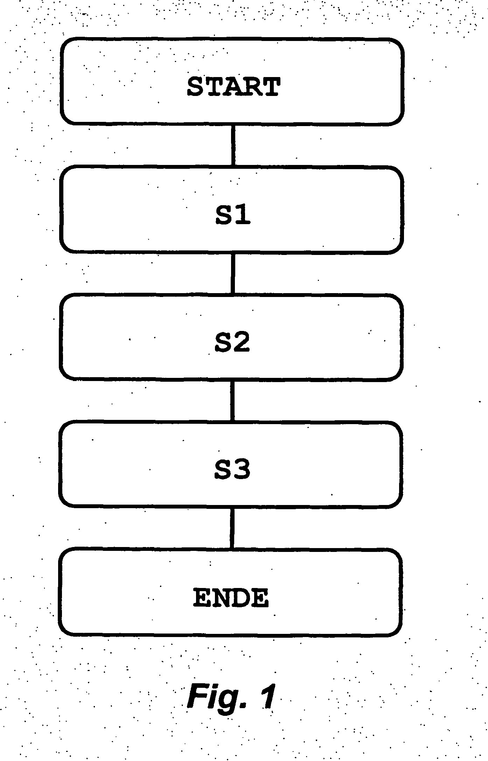

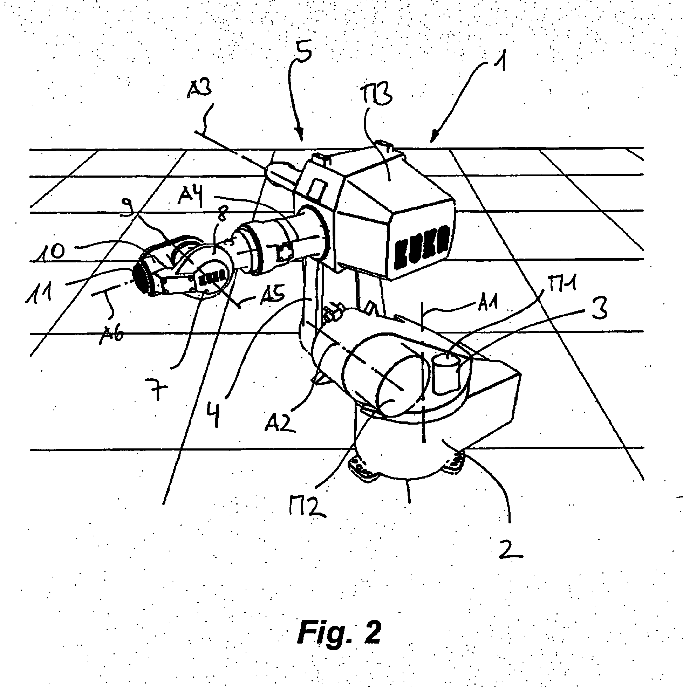

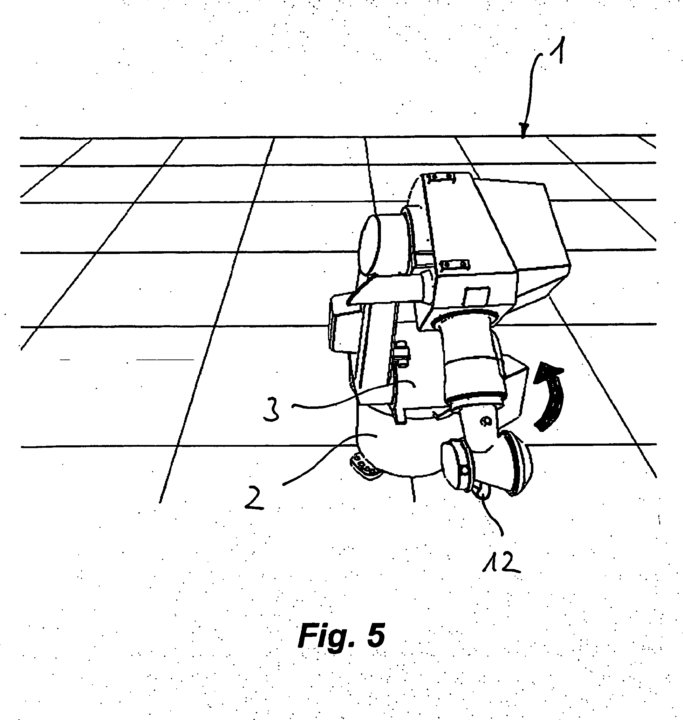

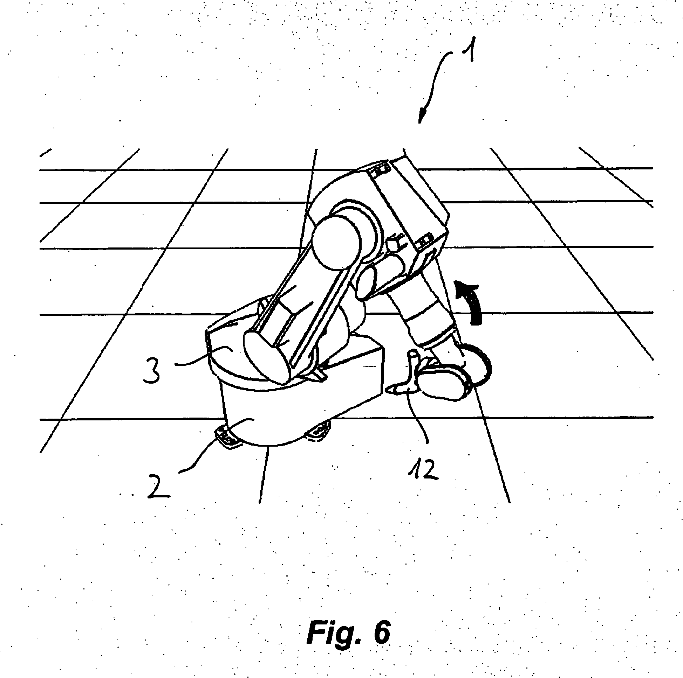

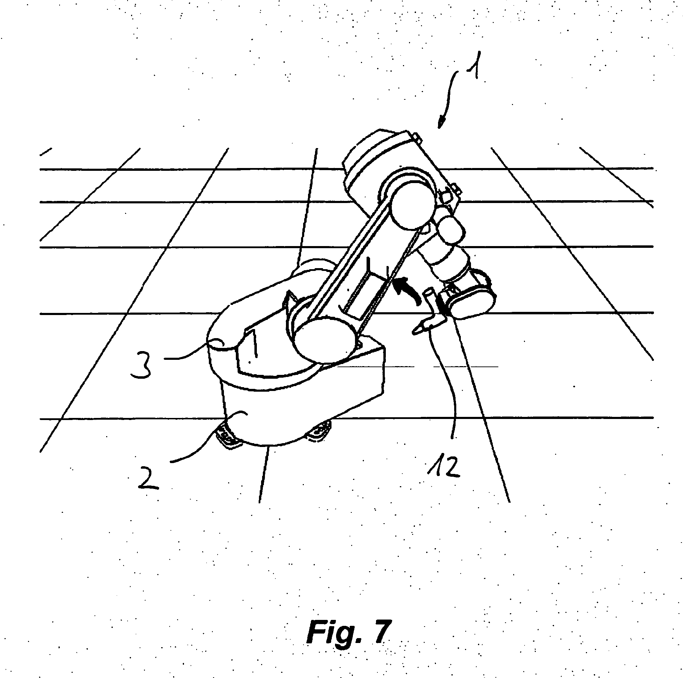

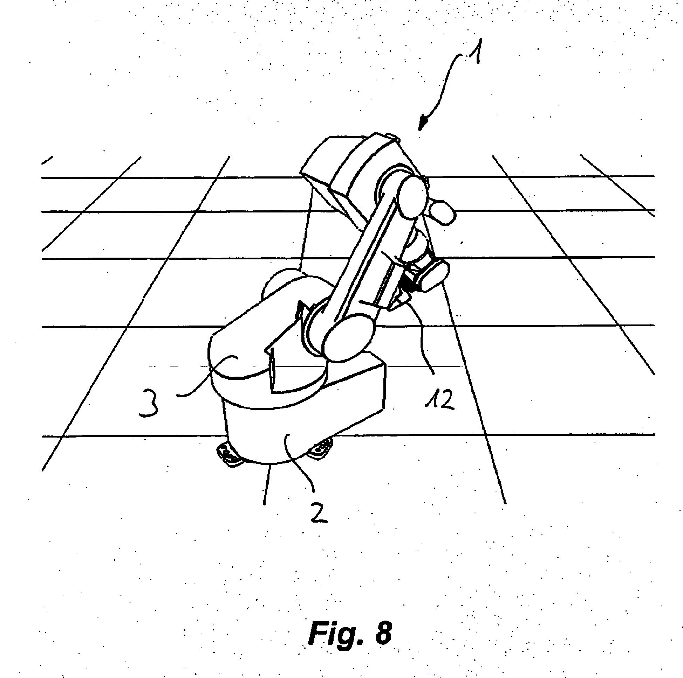

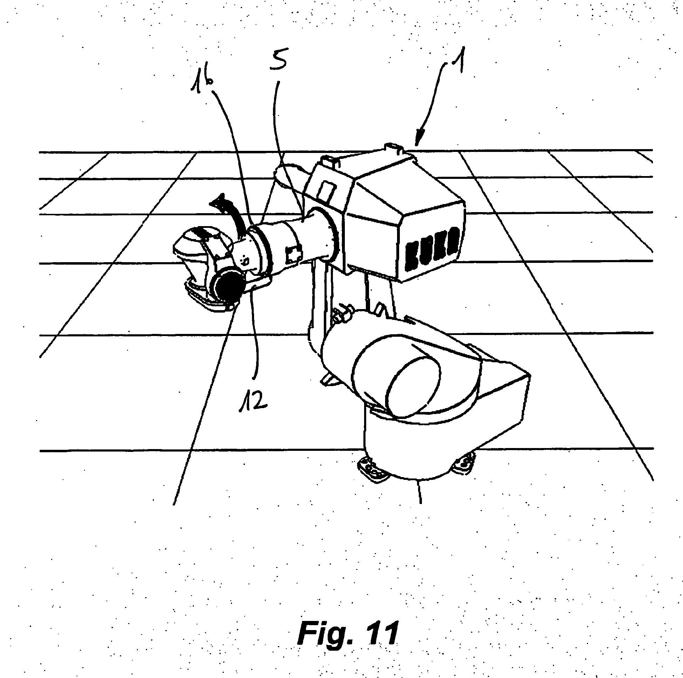

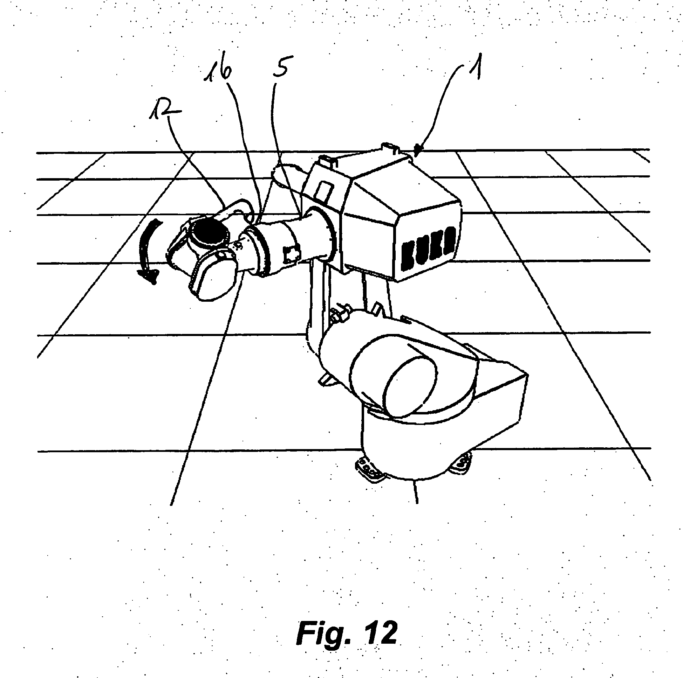

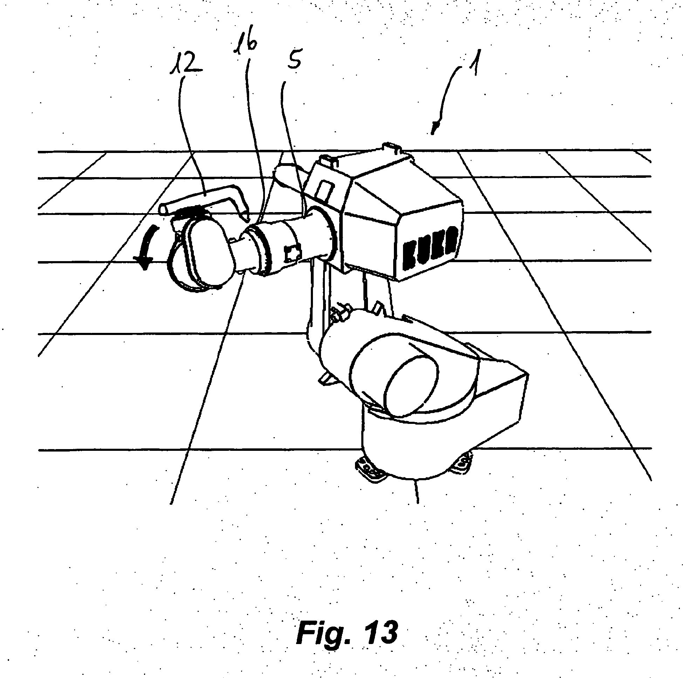

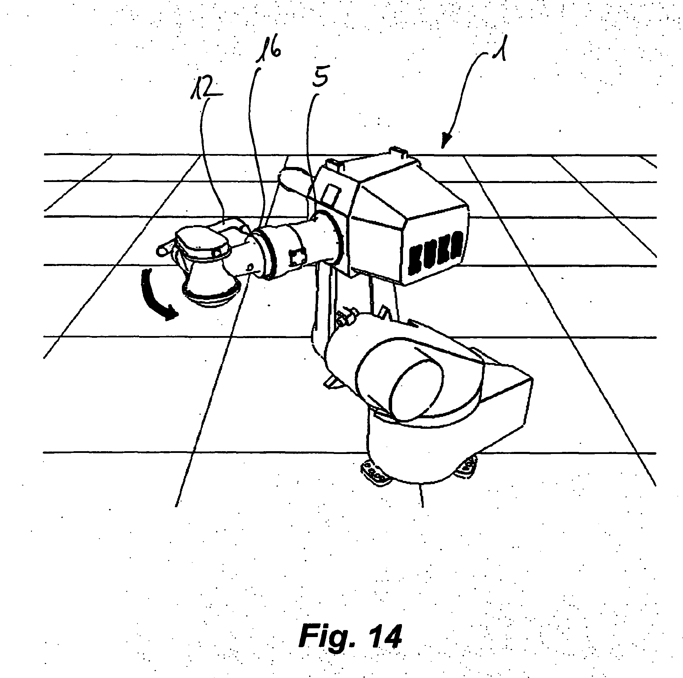

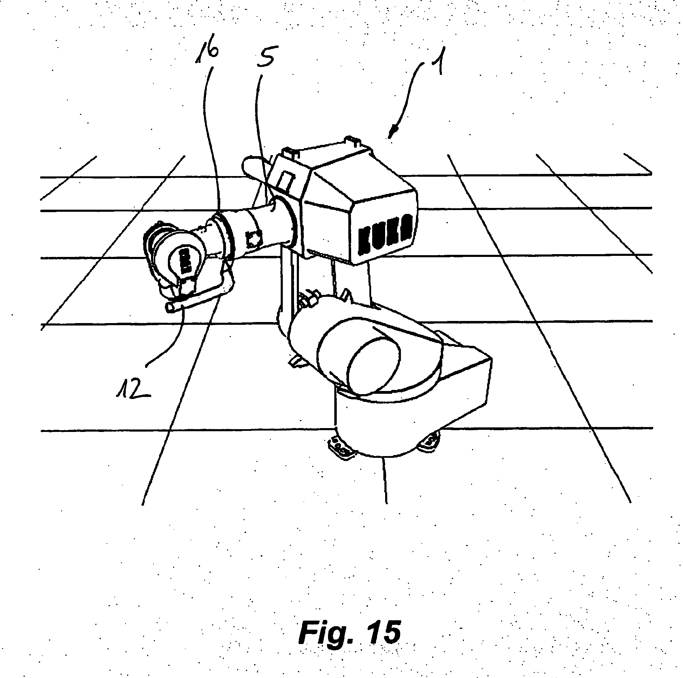

Die Fig. 1 zeigt einen Ablauf eines erfindungsgemäßen Verfahrens zum Reinigen eines mehrere über Gelenke verbundene Glieder aufweisenden Manipulators, im folgenden auch als Industrieroboter bezeichnet, wie er in der folgenden Figuren 2 bis 18 gezeigt ist.

Nach dem Start erfolgt in einem ersten Verfahrensschritt S1 ein Ausstatten des Manipulators mit mindestens einer Reinigungsdüse an einem seiner Glieder. In einem folgenden zweiten Verfahrensschritt S2 erfolgt ein Erzeugen eines Strahls aus Reinigungsfluid am Austritt der mindestens einen Reinigungsdüse. In einem dritten Verfahrensschritt S3 erfolgt dann ein Bewegen der Glieder des Manipulators, so dass der Strahl aus Reinigungsflüssigkeit auf eine Oberfläche mindestens eines der manipulatoreigenen Glieder gerichtet ist. Das Bewegen der Glieder des Manipulators kann solange erfolgen, bis das gewünschte Reinigungsergebnis erreicht ist. Nach Abschuß des gewünschten Reinigungsvorgangs endet das erfindungsgemäße Reinigungsverfahren.

Die Fig. 2 zeigt einen Industrieroboter 1 mit einem Grundgestellt 2 an dem ein Karussell 3 um eine erste vertikale Achse A1 drehbar gelagert und mittels eines ersten Antriebsmotors M1 drehangetrieben ist. An dem Karussell 3 ist eine Schwinge 4 um eine zweite horizontale Achse A2 auf und ab schwenkbar gelagert und mittels eines zweiten Antriebsmotors M2 drehangetrieben. Die Schwinge 4 trägt einen Arm 5, der um eine dritte horizontale Achse A3 auf und ab schwenkbar gelagert und mittels eines dritten Antriebsmotors M3 drehangetrieben ist. An dem Arm 5 ist eine vierte Achse A4 vorgesehen, welche in Längserstreckung des Armes 5 verläuft und über einen vierten Antriebsmotors eine Hand 7 des Arms 5 drehantreibt. An der Hand 7 erstrecken sich ein erster Schenkel 8 und ein zweiter Schenkel 9 gabelförmig nach hinten. Die beiden Schenkel 8 und 9 tragen eine Lagerung um ein freies Ende 10 der Hand 7 an dem Arm 5 zu lagern. Die Lagerung definiert eine fünfte Achse A5 des Industrieroboters 1, um welche die Hand 7 mittels eines fünften Antriebsmotors schwenkbar bewegt werden kann. Ergänzend weist die Hand 7 eine sechste Achse A6 auf, um einen Befestigungsflansch 11 mittels eines sechsten Antriebsmotors drehbar antreiben zu können.

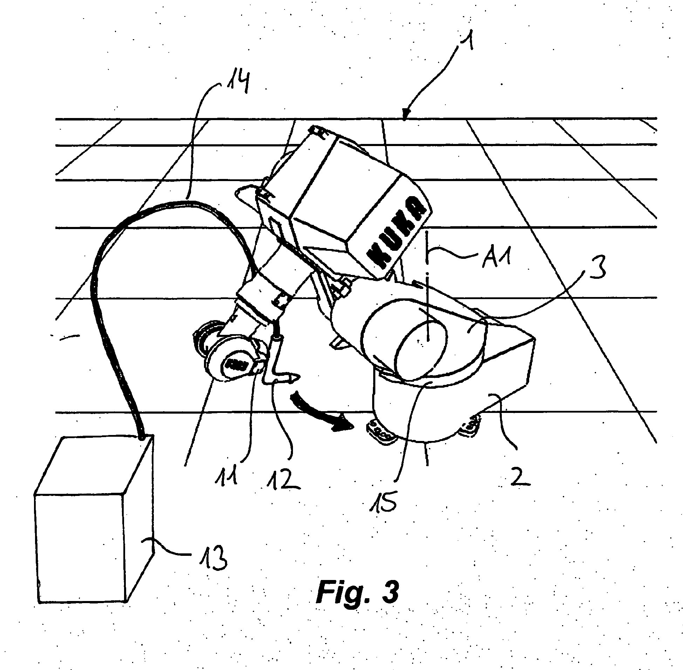

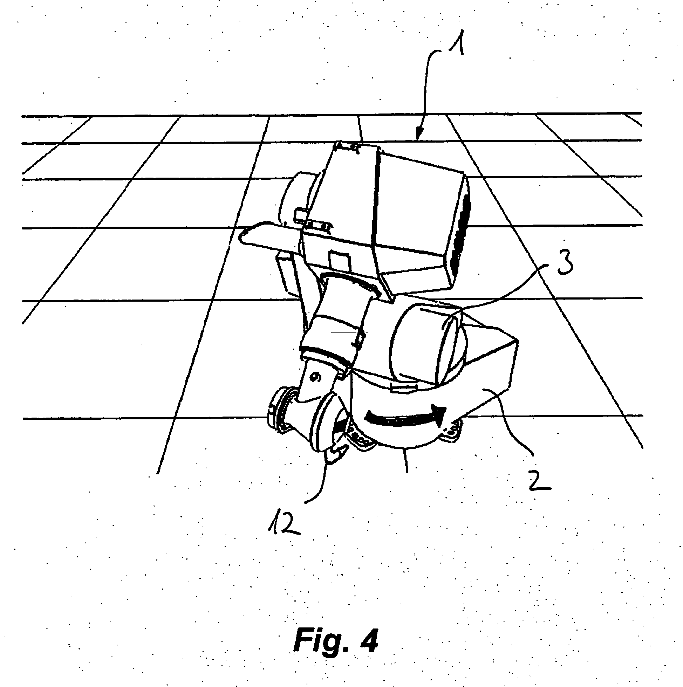

In Fig. 3 ist der Industrieroboter 1 nach Fig. 2 in einer Startposition einer ersten Bearbeitungssequenz gezeigt. Am Befestigungsflansch 11 des freies Ende 10 der Hand 7 ist eine Düse 12 befestigt. Die Düse 12 dient für einen kontrollierten Austritt von Reinigungsflüssigkeit in einer gewünschten Strahlform. So kann beispielsweise je nach Düsengestalt ein Punktstrahl, Fächerstrahl oder Kegelstrahl erzeugt werden. Die Düse 12 ist über eine Fluidleitung 14 mit einem Reinigungsaggregat 13 verbunden. Das Reinigungsaggregat 13 kann einen Vorratsbehälter und eine Fördereinrichtung, wie bspw. eine Pumpe aufweisen zur Förderung von Reinigungsfluid an die Düse 12. Aus der in Fig. 3 gezeigten Position bewegt sich nach dem Start der Industrieroboter 1 um seine erste Achse A1, so dass die Düse 12 in Pfeilrichtung im wesentlichen koaxial zur Achse A1 um das Grundgestellt 2 und das Karussell 3 geführt wird, um einen dazwischen liegenden ersten Dichtungsspalt 15 zu reinigen. Diese Bewegung um die Achse A1 wird in einer Bearbeitungssequenz, zur Veranschaulichung mit den Momentaufnahmen nach den Figuren 4 bis 8 gezeigt, entlang des Umfangs des Industrieroboters 1 weitergeführt, um den ersten Dichtungsspalt 15 zu reinigen. Zur vereinfachten Darstellung ist in den Figuren 4 bis 8 die Fluidleitung 14 und das Reinigungsaggregat 13 ausgeblendet.

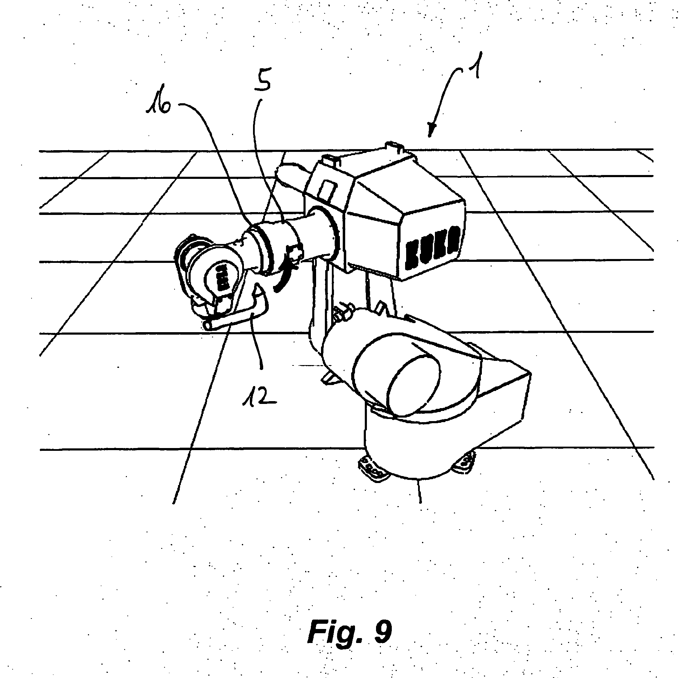

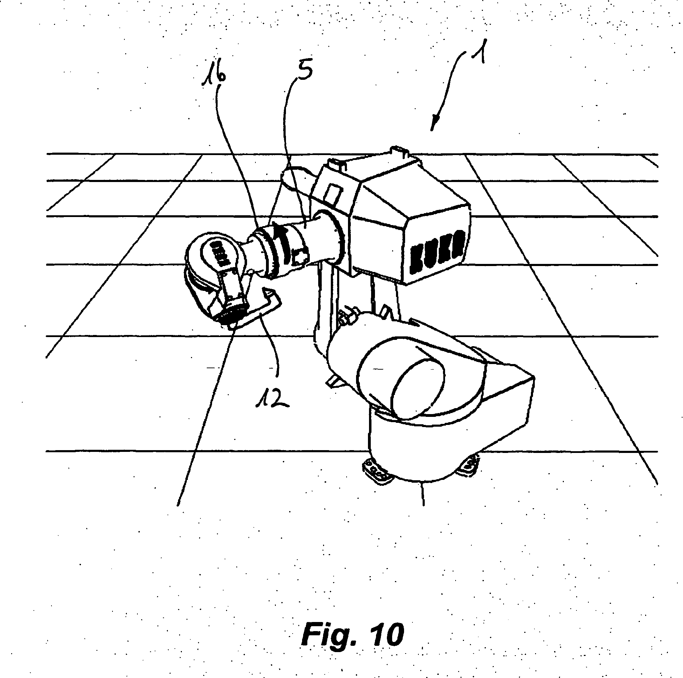

In Fig. 9 ist der Industrieroboter 1 nach Fig. 2 in einer Startposition einer zweiten Bearbeitungssequenz der Selbstreinigung einer Armachse des Industrieroboters gezeigt. Mit der Düse 12 erfolgt in der zweiten Bearbeitungssequenz eine Reinigung eines zweiten Dichtungsspalt 16. Der Industrieroboter 1 bewegt sich dabei nach dem Start um seine vierte Achse A4, so dass die Düse 12 in Pfeilrichtung im wesentlichen koaxial zur Achse A4 um den Arm 5 herum geführt wird, um den dort liegenden zweiten Dichtungsspalt 16 zu reinigen. Diese Bewegung um die Achse A4 wird in der zweiten Bearbeitungssequenz zur Veranschaulichung mit den Momentaufnahmen nach den Figuren 10 bis 15 gezeigt.

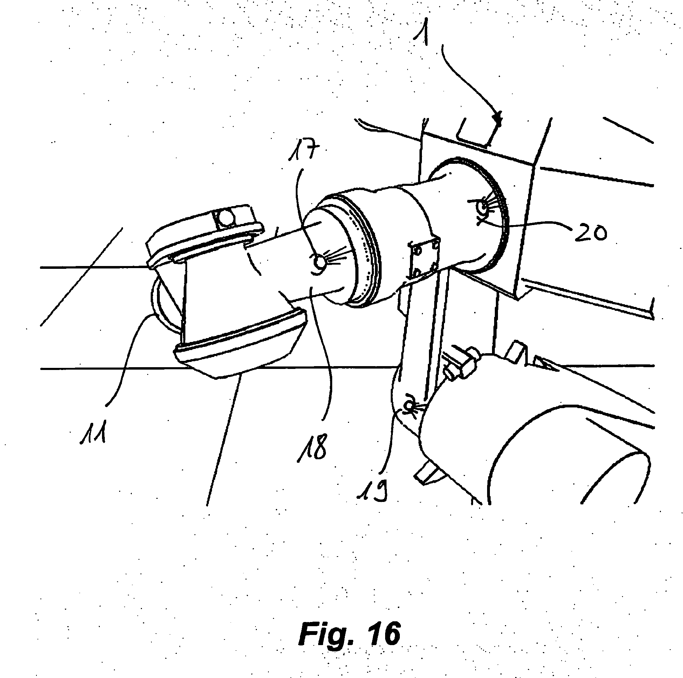

In der Fig. 16 ist eine Ausgestaltung des Industrieroboters 1 gezeigt mit einer zweiten Düse 17, die zusätzlich oder alternativ zur ersten Düse 12 verwendet werden kann. Die zweite Düse 17 ist nicht am Befestigungsflansch 11, sondern direkt an einem Glied 18 des Industrieroboters 1 befestigt. Neben dieser gezeigten Düse 17 können auch mehrere direkt an den Gliedern des Industrieroboters 1 befestigte Düsen, bspw. Düsen 19 und 20 vorgesehen sein.

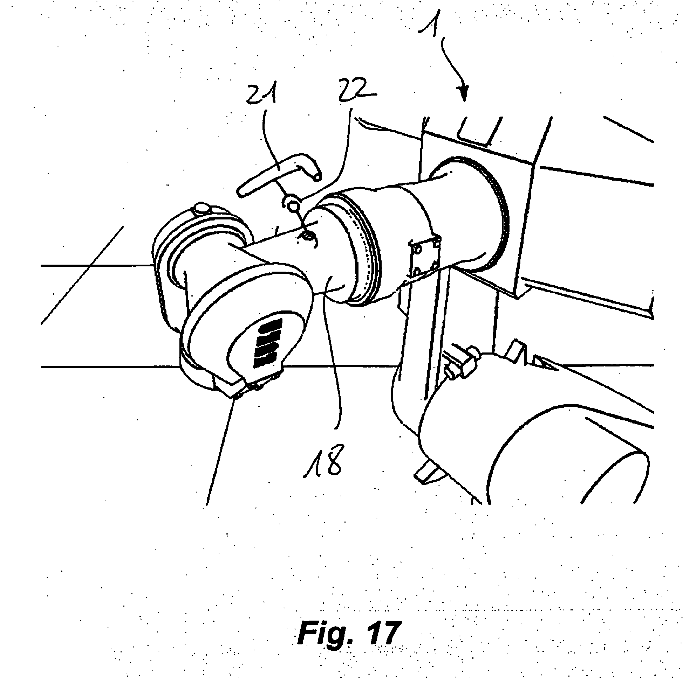

In der Fig. 17 ist eine Ausgestaltung des Industrieroboters 1 gezeigt, in der die Reinigungsdüse 21 über ein zusätzliches Gelenk 22 mit dem Glied 18 des Industrieroboters 1 verbunden ist. Durch das zusätzliche Gelenk 22 kann die Strahlrichtung der Reinigungsdüse 21 variiert werden und insbesondere auf einen bestimmten Wirkungsbereich zielgerichtet eingestellt werden. Dies kann entweder durch manuelles Verstellen eines mechanischen Gelenks 22 erfolgen oder durch automatisiert angesteuertes Verstellen eines motorisch angetriebenen Gelenks 22.

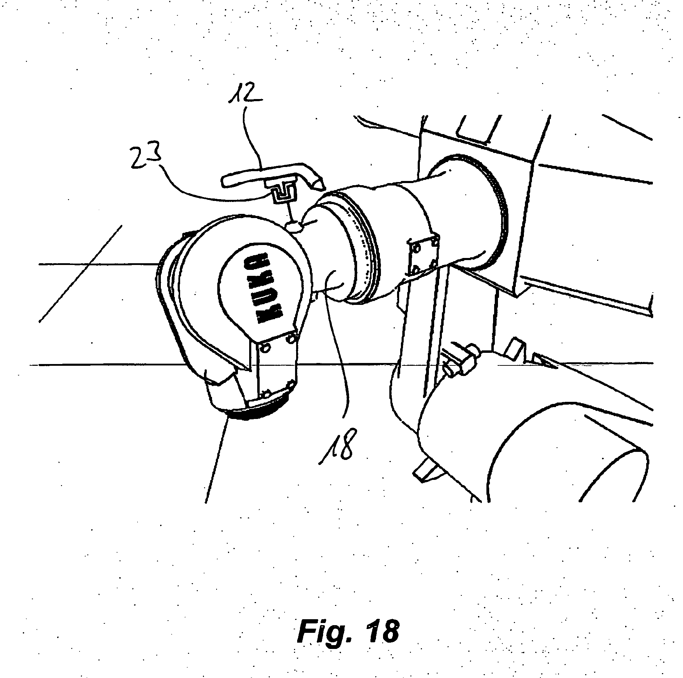

Wie in der Fig. 18 gezeigt, kann die Reinigungsdüse 12 mittels eines Wechseladapters 23 lösbar mit einem Glied 18 des Industrieroboters 1 verbunden sein. Durch den Wechseladapters 23 können unterschiedlich gestaltetet Arten von Reinigungsdüsen eingesetzt werden.

## Patentansprüche

1. Verfahren zum Reinigen eines mehrere über Gelenke verbundene Glieder aufweisenden Manipulators (1) mit den folgenden Schritten:
- Ausstatten (S1) des Manipulators (1) mit mindestens einer Reinigungsdüse (12) an einem seiner Glieder,
- Erzeugen (S2) eines Strahls aus Reinigungsfluid am Austritt der mindestens einen Reinigungsdüse (12),
- Bewegen (S3) der Glieder des Manipulators (1), so dass der Strahl aus Reinigungsflüssigkeit auf eine Oberfläche mindestens eines der manipulatoreigenen Glieder gerichtet ist.

2. Verfahren nach Anspruch 1, **dadurch gekennzeichnet, dass** der Strahl aus Reinigungsfluid durch eine am distalen Endglied des Manipulators (1) angeordneten Reinigungsdüse (12) vom distalen Endglied ausgehend entlang der Glieder des Manipulators (1) bis zum proximalen Anfangsglied geführt wird.

3. Verfahren nach Anspruch 1 oder 2, **dadurch gekennzeichnet, dass** der Strahl aus Reinigungsfluid zur Reinigung eines Dichtungsspaltes (15, 16) entlang des Umfangs mindestens eines Drehgelenks des Manipulators (1) geführt wird.

4. Verfahren nach Anspruch 3, **dadurch gekennzeichnet, dass** der Strahl aus Reinigungsfluid durch Bewegen desjenigen Drehgelenks um dessen Umfang geführt wird, dessen Dichtungsspalt (15, 16) zu reinigen ist.

5. Verfahren nach einem der Ansprüche 1 bis 4, **dadurch gekennzeichnet, dass** an zwei oder mehreren Gliedern des Manipulators (1) jeweils mindestens eine Reinigungsdüse (17, 19, 20) betrieben wird.

6. Verfahren nach einem der Ansprüche 1 bis 5, **dadurch gekennzeichnet, dass** der Manipulator (1) ergänzend entlang eines Strahls aus Reinigungsfluid aus einer ortsfest installierten Reinigungsdüse geführt wird.

## Claims

1. Method for cleaning a manipulator (1) with several members connected by joints comprising the following steps:
- equipping (S1) the manipulator (1) with at least one cleaning nozzle (12) on one of its members,
- producing (S2) a jet of cleaning fluid at the outlet of the at least one cleaning nozzle (12),
- moving (S3) the members of the manipulator (1) so that the jet of cleaning fluid is directed onto a surface of at least one of the manipulator's own members.

2. Method according to claim 1, **characterised in that** the jet of cleaning fluid is guided through a cleaning nozzle (12) arranged on the distal end member of the manipulator (1) from the distal end member along the members of the manipulator (1) up to the proximal start member.

3. Method according to claim 1 or 2, **characterised in that** the jet of cleaning fluid for cleaning a sealing gap (15, 16) is guided along the circumference of at least one rotary joint of the manipulator (1).

4. Method according to claim 3, **characterised in that** the jet of cleaning fluid is guided by moving said rotary joint around its circumference, the sealing gap (15, 16) of which is to be cleaned.

5. Method according to one of claims 1 to 4, **characterised in that** at least one cleaning nozzle (17, 19, 20) is operated on two or more members of the manipulator (1) respectively.

6. Method according to one of claims 1 to 5, **characterised in that** the manipulator (1) is guided additionally along a jet of cleaning fluid from a fixed installed cleaning nozzle.

## Revendications

1. Procédé de nettoyage d'un manipulateur (1) présentant plusieurs membres reliés par des articulations, comportant les étapes suivantes :
- équipement (S1) du manipulateur (1) avec une buse de nettoyage (12) sur un de ses membres,
- production (S2) d'un jet de fluide de nettoyage à la sortie de ladite au moins une buse de nettoyage (12),
- mise en mouvement (S3) des membres du manipulateur (1) de telle sorte que le jet de liquide de nettoyage soit orienté sur une surface d'au moins un des membres propres au manipulateur.

2. Procédé selon la revendication 1, **caractérisé en ce que** le jet de fluide de nettoyage est guidé par une buse de nettoyage (12) agencée sur le membre terminal distal du manipulateur (1) en partant du membre terminal distal, le long des membres du manipulateur (1) jusqu'au membre de départ initial proximal.

3. Procédé selon la revendication 1 ou 2, **caractérisé en ce que** le jet de fluide de nettoyage pour nettoyer une fente d'étanchéité (15, 16) est guidé le long de la circonférence d'au moins une articulation rotative du manipulateur (1).

4. Procédé selon la revendication 3, **caractérisé en ce que** le jet de fluide de nettoyage est guidé en faisant mouvoir l'articulation rotative autour de sa circonférence dont la fente d'étanchéité (15, 16) doit être nettoyée.

5. Procédé selon l'une des revendications 1 à 4, **caractérisé en ce qu'**au moins une buse de nettoyage (17, 19, 20) respective fonctionne sur deux ou plusieurs membres du manipulateur (1)

6. Procédé selon l'une des revendications 1 à 5, **caractérisé en ce qu'**en supplément, le manipulateur (1) est guidé le long d'un jet de fluide de nettoyage provenant d'une buse de nettoyage installée stationnaire.
